# EUROPEAN PATENT APPLICATION

(11) **EP 1 519 220 A1**
(43) Date of publication of application: **30.03.2005**
(21) Application number: 03021892.9
(22) Date of filing: 27.09.2003
(51) Int. Cl.: G02F 1/15, G04F 1/02, G09F 3/02

(54) **Electrochemical display device**

(71) Applicant: 3M Innovative Properties Company, St. Paul, MN 55133-3427 (US)
(72) Inventor: Kuepper, Anton, 41564 Kaarst (DE); Schumacher, Knut, 41466 Neuss (DE)
(74) Representative: Hilleringmann, Jochen, Dipl.-Ing.

(57) **Abstract**

An electrochemical display device capable of irreversibly switching from a first indicating state to a second indicating state comprises a substrate (12) having an electrically insulating surface (16), and a first electrode (30) located on at least a part of said surface (16) of said substrate (12), wherein said substrate (12), at least within said part of its surface (16) is light-transmissive, the transmissivity of the combination of said substrate (12) and said first electrode (30) being less than that of said part of said substrate (12). Furthermore, the electrochemical display device comprises a second electrode (32), and an electrolytic liquid (28) arranged between and in electrical contact with said first and second electrodes (30,32), wherein, upon application of an electrical voltage to said first and second electrodes (30,32), material of said first electrode (30) dissolves into said electrolytic liquid (28) exposing at least partially said substrate (12) thereby switching from the first indicating state to the second indicating state.

## Description

### BACKGROUND OF THE INVENTION

### Field of the Invention

The present invention relates to an electrochemical display device capable of irreversibly switching from a first indicating state to a second indicating state and, in particular, to a non-reversible bistable electrochemical display device having a flat design which works reliably and needs comparatively little energy for switching from the first indicating state to the second indicating state.

### Related Prior Art

Several indicating or displaying devices of different types and technologies are known in the prior art. Among these types of indicating or displaying devices there are electrochrome display devices (see e.g. DE-A-25 45 391 and DE-A-198 25 371), electroluminescent display devices (see e.g. DE-A-100 42 500), and the widely spread LCD display devices. Moreover, indicating devices are known in which the change of an indicating state results from a chemically induced change of colour (see e.g. EP-B-0 081 031 and DE-A-44 43 470).

The problem with all of the above-identified types of display devices is that maintaining one of the two indicating states requires the provision of energy of a power supply. As soon as power is no longer supplied (e.g. due to an exhaust of the power supply like a battery or the like) the display device automatically switches to the indicating state which requires no power.

In US-A-4,156,559 as well as in DE-B-27 27 854 there is disclosed an electrolytic display cell comprising two parallel plates whereof one is covered by a semi-transparent electrode and whereof the other supports a counter-electrode. Between the electrode and the counter-electrode an electrolyte is arranged containing a metallic salt dissolved in a solvent. The electrode and counter-electrode are connected to the positive and negative terminals of a d.c. voltage source via a switch permitting the connection of each terminal to any one of the electrodes. Connecting the electrode of the electrolytic display device to the negative terminal of the d.c. voltage source results in a electrolytic deposition of the metallic salt of the electrolyte on the semi-transparent electrode resulting in a change of its transmissivity defining a first indicating state. If the electrode is connected to the positive terminal of the d.c. voltage source, the metallic salt disposed on the semi-transparent electrode dissolves into the electrolyte. That means an indication on the known electrolytic display device can be erased again which is a disadvantage if the switch can be operated inadvertently so that valuable information may get lost.

### SUMMARY OF THE INVENTION

It is an object of the present invention to provide an electrochemical display device having a simple construction and capable of operating reliably to switch irreversibly from a first indicating state to a second indicating state.

Another object of the present invention is that the electrochemical display device consumes a comparatively small amount of energy.

A further object of the present invention is that the electrochemical display device can have a flat configuration like a flat strip, sheet or tape.

The present invention provides an electrochemical display device capable of irreversibly switching from a first indicating state to a second indicating state, wherein the device comprises:
- a substrate having an electrically insulating surface,
- a first electrode located on at least, a part of said surface of said substrate,
- wherein said substrate, at least within said part of its surface is light-transmissive, the transmissivity of the combination of said substrate and said first electrode being less than that of said part of said substrate,
- a second electrode, and
- an electrolytic liquid arranged between and in electrical contact with said first and second electrodes,
- wherein, upon application of an electrical voltage to said first and second electrodes, material of said first electrode dissolves into said electrolytic liquid exposing at least partially said substrate thereby switching from the first indicating state to the second indicating state.

The electrochemical display device according to the invention comprises a first substrate. The substrate within at least a part thereof is light-transmissive. Within this light-transmissive part or region of the first substrate there is arranged a first electrode of a material such that the transmissivity of the combination of the first substrate and the first electrode is less than the transmissivity of the part of the first substrate within which the first electrode is located. The first substrate or at least its surface on which the first electrode is applied, is made of an electrically insulating material.

The electrochemical display device according to the invention provides a second electrode and an electrolyte arranged between and in electrical contact with both electrodes.

Upon application of an electrical voltage to the electrode with the first electrode being connected to the positive potential and the second electrode being connected to the negative potential of a voltage source, material of the first electrode dissolves into the electrolyte resulting in at least partially exposing the first substrate thereby changing its transmissivity which can be observed as switching from a first indicating state in which the first substrate within its part covered by the first electrode has a relatively low transmissivity, to a second indicating state in which the first substrate within its part covered by the first electrode has a higher transmissivity.

A feature of the electrochemical display device according to the invention is that the substrate on which the first electrode is located comprises an electrically insulating material. That means that dissolving the material of the first electrode into the electrolyte automatically results in an interruption of the electrical circuit through the electrolyte to the second electrode. More specifically, because the only conductor on the substrate side of the electrolyte, (i.e. the first electrode), is destroyed and because the surface of the substrate carrying the first electrode is electrically insulating, no current can flow through the electrolyte any longer. Consequently, switching the polarity of the electrical voltage source will not result in a reverse flow of current within those areas of the first substrate within which the first electrode is dissolved into the electrolyte i.e. is removed from the first substrate.

An electrochemical display device according to the invention may have a comparatively simple and reliably functioning construction in which the electrolytic liquid is in the form of a layer captured between two substrate layers provided with electrodes within those areas in which the substrate layers are contacted by the electrolytic liquid. The electrolytic liquid can be retained by an element that surrounds the electrolytic liquid as well as keeps it in place and also serves as a spacer element between the two substrate layers. It is preferred to arrange a porous material soaked with the electrolytic liquid between the substrate layers. Due to capillary forces, the electrolytic liquid is prevented from exiting the porous material so that the substrate layers and the annular retaining element surrounding the porous material need not to have liquid sealing properties. However, it is suitable to provide for an evaporation barrier around the electrolytic liquid which can be realised by suitable materials for the substrates, the electrodes, and the annular retaining element. Evaporation barrier materials are basically known in the art.

Moreover, the power consumption of an electrochemical display device according to the invention can be made comparatively low by using a rather thin first electrode. For this, a first electrode having a thickness within sub-micron ranges (i.e. 1 to 100 nm) is most preferred so that only a small amount of energy is required to dissolve the material of the first electrode.

Finally, dissolving of the first electrode into the electrolytic liquid can take place rather slowly further reducing the required power of the power source. In other words, for the dissolving process of the first electrode very little current flows are sufficient resulting in low power consumption. In other words, even if the battery or the like which is used as an operating voltage source for the device according to the invention, due to lifetime problems or the like other reasons generates a rather low current, it still can operate the electrochemical display device according to the invention so as to switching reliably from the first indicating state to the second indicating state.

In a preferred embodiment of the present invention, the electrochemical display device can comprise several display cells each provided with a first electrode and a second electrode. Each display cell can be provided with a first and a second electrode. However, it is also possible that all (or some of) the display cells have a common second electrode and individual first electrodes.

As already indicated above, it is preferred that the electrolytic liquid is soaked in a porous element. One example of such a porous element is a non-woven layer. Other porous elements like foam material are also possible.

Moreover, it is preferred to use substrate layers coated with metallic layers for providing the electrodes. In such a design it is possible to provide on one of the substrates an electrically conductive pad electrically insulated from the electrode on the respective substrate, wherein the electrically conductive pad is in electrical contact with the metallic layer of the other substrate when the substrates and the electrolytic liquid layer therebetween are sandwiched.

As an alternative to a porous element soaked with the electrolytic liquid, at least one of the substrates can comprise at least one recess filled with the electrolytic liquid and having a respective electrode arranged therein. In such a design the other substrate can be regarded as a cover layer for covering the recess in the substrate.

As being evident from the above, the electrolytic liquid is visible from outside through the light transmissive first substrate when the first electrode is dissolved into the electrolytic liquid. For enhancing the visibility of the electrolytic liquid, it is preferred to use a coloured electrolytic liquid.

In the assembled state, a seal is arranged around the electrolytic liquid. This seal can comprise a bonding material such as an adhesive material or a heat seal material also connecting the substrates of the electrochemical display device.

As explained above, in the electrochemical display device when the first electrode dissolves, the electrical contact to the electrolytic liquid is interrupted because the surface of the substrate on which the first electrode is located is made of an electrically-insulating material. It is possible that, during the dissolving process individual islands of material of the first electrode will remain, to which no electrical contact is provided so that they cannot dissolve into the electrolytic liquid. This can be prevented if the surface of the first electrode is rather smooth and its thickness is homogenous. However, this requires rather precise manufacturing steps for manufacturing the first electrode as well as precise assembling steps when assembling the display device.

In order to prevent the formation of isolated islands within the first electrode, it is preferred to incline the first electrode relative to the second or to curve the first electrode and its substrate so that the distance between the electrodes varies between different areas of the electrodes. The dissolving process will start within that area of the first electrode having the smallest distance to the second electrode. In order to maintain flow of current through the first electrode and the electrolytic liquid during the dissolving process, the electrical connection between the first electrode and the voltage supply should be arranged within that area of the first electrode having the largest distance to the second electrode. By way of this design a controlled dissolving gradient of the first electrode is provided, preventing the formation of islands in the first electrode.

### BRIEF DESCRIPTION OF THE DRAWING

The invention will be described in further detail referring to the drawing in which
- Fig. 1: is a cross-sectional view of an electrochemical display device according to a first embodiment illustrating the basic function of the device and the first indicating state thereof in which the first electrode is present,
- Fig. 2: is a cross-sectional view of the device of Fig. 1 in its second indicating state in which the first electrode is dissolved,
- Fig. 3: shows a top view of the device in its second indicating state,
- Fig. 4: shows an isometric view of one of the two substrates of an electro-chemical display device having several (three in this embodiment) display cells according to a second embodiment of the invention,
- Fig. 5: is an isometric view of the display device according to the second embodiment in its assembled state,
- Fig. 6: illustrates a top view of the display device of Fig. 5 when no display cell is activated,
- Fig. 7: shows a top view of the display device of Fig. 5 when one display cell is activated,
- Fig. 8: illustrates the individual parts of a electrochemical display device according to a further embodiment as well as the assembled display device in both of its indicating states,
- Fig. 9: is a cross-sectional view taken along line IX-IX of Fig. 8,
- Fig. 10: illustrates the individual parts of a electrochemical display device according to a fourth embodiment as well as the assembled display device in both of its indicating states,
- Fig. 11: illustrates the individual parts of a electrochemical display device according to a fifth embodiment as well as the assembled display device in both of its indicating states,
- Fig. 12: is a isometric view, partially in cross-section, of a further (sixth) embodiment of a electrochemical display device according to the invention,
- Fig. 13: schematically shows the electrochemical display device of Fig. 12 together with the control circuitry for controlling the device, and
- Fig. 14: is a cross-sectional view taken along line XIV-XIV of Fig. 13.

### DETAILLED DESCRIPTION OF PREFERRED EMBODIMENTS

In the Figures different electrochemical display devices according to the invention are shown wherein like parts of the individual embodiments are referred to by the same reference numerals.

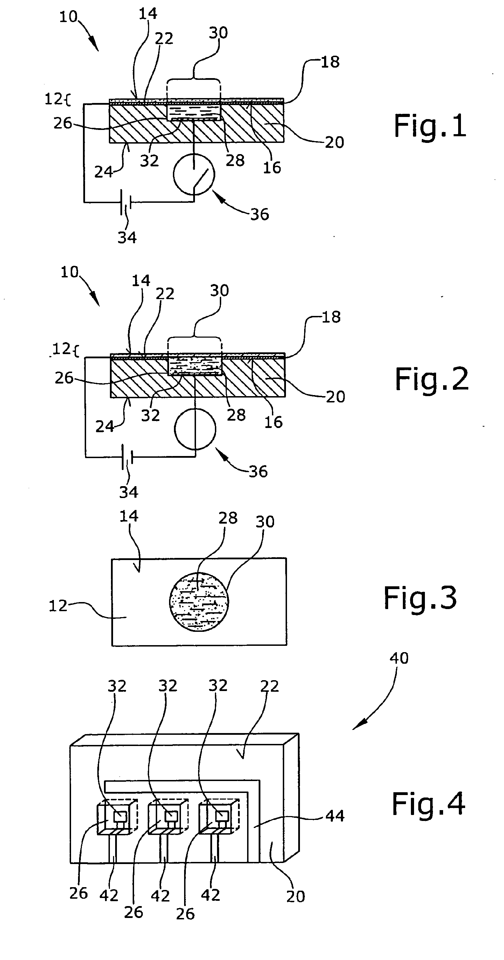

The basic construction and function of an electrochemical display device according to the invention will be described referring to a first embodiment as shown in Figures 1 to 3.

In Fig. 1 a cross-sectional view of an electrochemical display device 10 is shown. The device 10 comprises a light-transmissive first substrate 12 comprising a glass plate. The first substrate 12 has two major surfaces 14,16 wherein the surface 16 is provided with a metal layer 18 which may, for example, be formed by vapour deposition. The metal layer 18 comprises Cr or Cu and has a thickness of preferably 10 to 50 nm. Other layer thicknesses for example more than 100 nm are also possible. The metal layer 18 reduces the light-transmissivity of the first substrate 12 to a degree depending on the thickness of the metal layer 18.

The device 10 of Fig. 1 comprises a second substrate 20 which e.g. is a plastic molded substrate having major surfaces 22 and 24. The second substrate 20 is provided with a cavity 26 which is open to the major surface 22. This surface 22 contacts the metal layer 18 of the first substrate 12 so that both substrates form a sandwich structure. The cavity 26 is filled with an electrolytic liquid 28 which in this embodiment comprises a NaCI-aqueous solution. Other electrolytic liquid materials are also possible which is clear to those skilled in the art.

The metal layer 18 within the area in which it extends over the cavity 26 forms a first electrode 30 while a second electrode 32 is arranged at the bottom or at the side walls of the cavity 26. Both electrodes 30 and 32 are in physical and electrical contact with the electrolytic liquid 28.

As can be seen from Fig. 1, voltage from a source 34 can be applied to the metal layer 18 and the second electrode 32 by operating a switch 36. When the positive electrical potential of the voltage source 34 is applied to the metal layer 18 of the first substrate 12, i.e. to the first electrode 30, and the negative electrical potential is applied to the second electrode 32, an electrical current flows through the electrolytic liquid 28 as a result of an electrochemical reaction between the electrolytic liquid and the first electrode 30 which degenerates and dissolves into the electrolytic liquid. Consequently, the first electrode 30, i.e. the metal layer 18 within the area of the cavity 26 is removed (see Fig. 2) so that the transmissivity of the device 10 when viewed from above will change so that the electrolytic liquid 28 and/or the cavity 26 will become visible (see Fig. 3).

Using the materials mentioned above for the metal layer 18 and the electrolytic liquid 28, overall resistances between the metal layer 18 and the second electrode 32 of about 10 kΩ where measured. When using a typical battery voltage of about 3 V, a current of about 0.1 to 1 mA will flow. For removing a first electrode 30 having a size of about 10 mm² and a thickness of about 50 nm, 1 to 20 seconds were found to be necessary with the above-mentioned construction of the device 10.

Instead of glass as material used for the first substrate 12, other non-electrically-conductive materials can be used such as any kind of synthetic material. Also other metals than Cr and Cu can be used for the metal layer 18. Finally, also different electrolytic liquids can be used. However, care should be taken that the metal layer 18 is inert to the electrolytic liquid 28 as long as no voltage is applied. Moreover, the materials surrounding the electrolytic liquid should provide a evaporation or diffusion barrier preventing the cavity 26 from drying out.

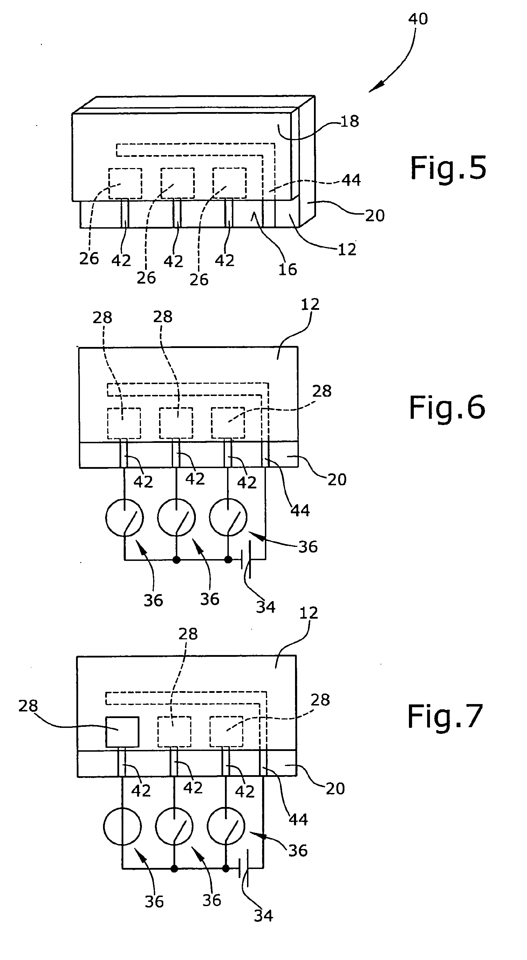

Figures 4 to 7 show a second electrochemical display device 40 in accordance with the invention. In this embodiment, the first substrate 12 partially is covered on its surface 16 by a copper layer 18 (see Fig. 5). The first substrate 12 is made from glass or is provided as a synthetic film layer.

The second substrate 20 is a molded plastics substrate manufactured according to the molded interconnect device (MID)-technique. With this technique it is possible to create three-dimensional printed circuit board (PCB) as well as interconnects on a plastics substrate as basically known to those skilled in the art of PCB. According to Fig. 4, in this embodiment three cavities 26 are molded into major surface 22 of the second substrate 20. Also on this major surface 22 electrically conductive traces 42 are provided terminating at respective second electrodes 32 at the bottom of the cavities 26. An additional conductive trace 44 is formed on the major surface 22 of the substrate 20 (see Fig. 4) in such a position that, in the assembled device (Fig. 6) it is in physical and, accordingly, electrical contact with the metal layer 18.

In the assembled state (see Fig. 6) the copper layer 18 covers the cavities 26 which are filled with an electrolytic liquid 28. Although the first substrate 12 is light-transmissive, the cavities 26 and the electrolytic liquid 28 are invisible from the top side of the display (Fig. 6) due to the presence of the metal layer 18.

A voltage source 34 is connected to the conductive traces 42 and 44. Connection of the negative potential of the voltage source 34 to each of the conductive traces 42 is formed by switches 36. When closing one of these switches, the metal layer 18 within the area of the cavity 26 associated to that switch 36 will dissolve into the electrolytic liquid 28 so that the cavity and the electrolytic liquid can be seen when viewing to the device 40 from. its top side.

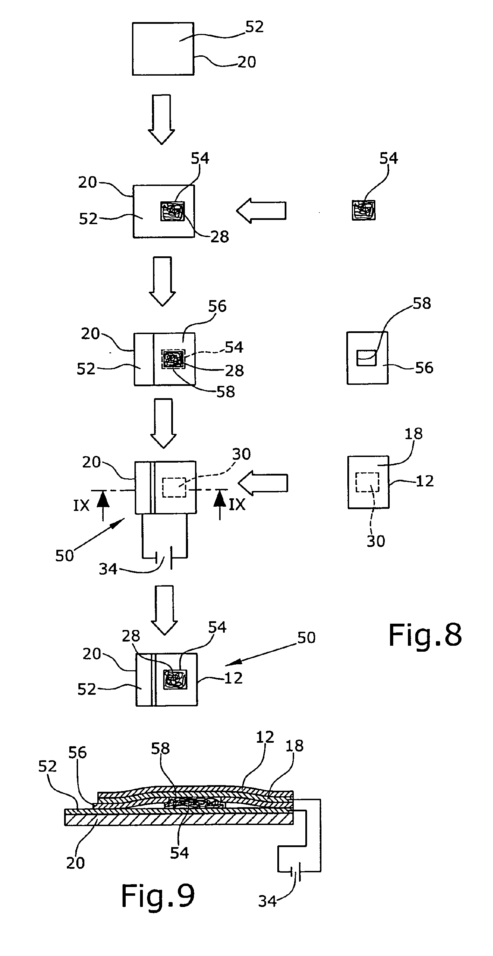

A further electrochemical display device having a flat overall design and a simple construction with reliable functionality is shown in Figures 8 and 9. In Fig. 8 the individual elements of the device 50 according to this embodiment can be seen. The second substrate 20 of the device 50 is formed by a first film which on one of its major surfaces is metallized.

A non-woven pad 54 soaked with an electrolytic liquid 28 is arranged on the metal layer 52 of the second substrate 20. The electrolytic liquid can be water, salt water or other electrolytes as known to those skilled in the art. The non-woven pad 54 can be made of any suitable fibers in particular synthetic fibers such as PP, PE, or other polymeric or polyolefin materials. The non-woven pad 54 provides a porous structure maintaining the soaked electrolytic liquid due to capillary forces.

Arranged above the non-woven pad 54 is a structured double-sided adhesive pad 56 having a through hole 58 in its center so that a surrounding frame is provided. The double-sided adhesive pad 56 is covered by a first substrate 12 also provided with a metal layer 18 on its lower side so that the metallization contacts the non-woven pad 54 and the electrolytic liquid within the area defined by the through hole 58 in the adhesive pad 56. In this example the metal layer 52 can be made from aluminum, chrome, copper or other materials by means of a physical vapour deposition or chemical vapour deposition or other processes. The thickness of the metal layer 52 is in the order of 10 to 500 nm. Other thickness ranges are possible as long as the metal layer 52 reduces the transmissivity of the light-transmissive film layer of substrate 20 which in turn preferably has a thickness in the range of 50 µm to 1 mm.

Fig. 9 shows a cross-sectional view through the construction of the device 50 as explained above.

When applying electric voltage from voltage source 34 to the metallizations of both substrates 12 and 20 (which metallizations are electrically insulated by the structured double-sided adhesive pad 56 outside the area of the non-woven pad 54 and the electrolytic liquid 28), the metal layer 18 within its area defining the first electrode 30 will dissolve into the electrolytic liquid 28 so that the pad 54 and the electrolytic liquid 28 can be seen from the top side of the device 50.

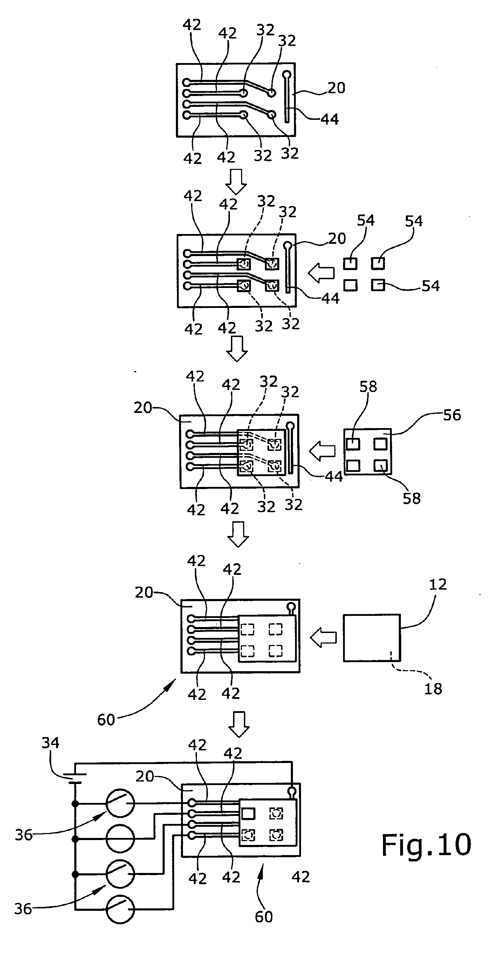

A further embodiment of the present invention is shown in Fig. 10. In this device 60, the second substrate 20 is a conventional printed circuit board (PCB) made for example of standard FR4 material. By using conventional edging technologies, on the PCB substrate 20 individual electrically conductive traces of leads 42 are built terminating at the second electrodes 32. In this embodiment, four second electrodes 32 arranged at the corners of a rectangular area, in particular a square, are provided. An additional conductive trace 44 is also built on the PCB substrate 20.

Four non-woven pads 54 soaked with electrolytic liquid are arranged so as to cover the second electrodes 32 and the area of the PCB substrate 20 surrounding each of the electrodes 32.

Over the arrangement of the non-woven pads 54, a double-sided adhesive pad 56 is located provided with four through-holes 58 aligned with the non-woven pads 54. The adhesive pad 56 is covered by the transparent substrate 12 coated with a metal layer 18 on its lower side. The metal layer contacts all of the non-woven pads 54 and, accordingly, the electrolytic liquid soaked therein as well as the additional conductive trace 44 of the PCB substrate 20. The other areas of the metal layer 18 are electrically insulated from the PCB substrate 20 by way of the adhesive pad 56.

When applying an electrical voltage between the conductive trace 44 and one of the conductive traces 42, an electrical current flows through the electrolytic liquid of the non-woven pad 54 associated to the respective conductive trace 42 resulting in a removal of the metal layer 18 within the area covering the associated non-woven pad 54 so that the pad 54 and the electrolytic liquid is visible through the light-transmissive substrate 12.

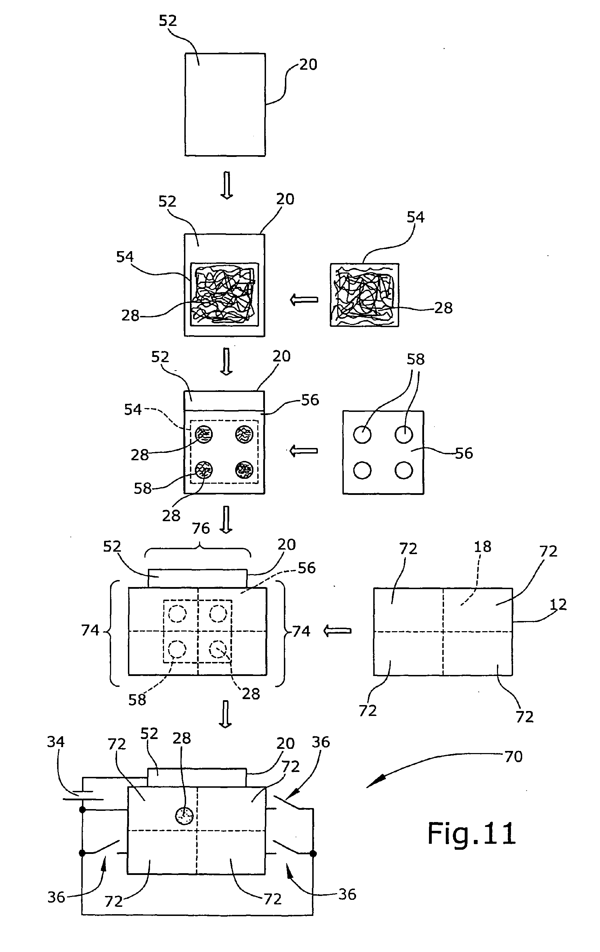

Another embodiment of the present invention is shown in Fig. 11. The embodiment of the device 70 of Fig. 11 is constructed similarly to the device 60 of Fig. 10 with the function of the substrates 12 and 20 being inverted. According to Fig. 11, the second substrate 20 is comprised of a thin film layer of synthetic material having a metallized surface 52. A non-woven pad 54 soaked with electrolytic liquid 28 is placed on the metal layer 52. A structured double-sided adhesive pad 56 is arranged on top of the non-woven pad 54 and is adhered to that pad 54 as well as to the substrate 20 within the area thereof surrounding the pad 54. Four through-holes 58 are formed in the adhesive pad 56. A substrate layer 12 of electrically-insulating synthetic material covers the adhesive pad 56. The substrate 12 is provided with a metal layer 18 on its lower side wherein this metal layer is structured so as to comprise four portions 72 separated from each other by grooves provided e.g. by cutting the metal layer 18.

As can be seen from Fig. 11, end portions 74 of the substrate 12 laterally project beyond the substrate 20, while end portion 76 of the substrate 20 projects beyond the substrate 12. Within the projecting areas of both substrates, the metal layer 52 and 18 can be contacted so as to be connected to a voltage source 34 for providing electrical voltage to the individual portions of the metal layer 18 by means of switches 36. In the lower portion of Fig. 11, a indicating state of the device 70 is shown in which one of the portions 72 of the metal layer 18 is connected to the positive potential of the voltage source 34 resulting in an indication in the respective area of the substrate 12.

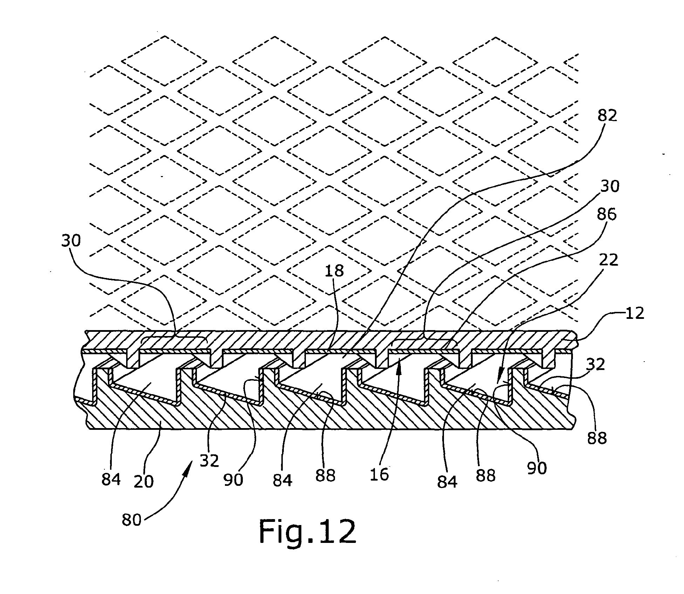

Another embodiment of the present invention shall be explained in more detail referring to Figures 12 to 14. This embodiment relates to a electrochemical display device 80 provided in a matrix-like structure and including an electrically insulating light-transmissive first substrate 12 and a second substrate 20. Both substrates 12 and 20 are structured on their respective confronting surfaces 16,22 with parallel first channels 82 and parallel second channels 84, respectively, wherein both sets of channels 82,84 are crossing each other. At least the bottom areas 86 of the first channels 82 of the first substrate 12 are covered by a metal coating 18 of any suitable material interacting with an electrolytic liquid when applying an electrical voltage. Also at least the bottom surface 88 and/or the side surfaces 90 of the second channels 84 are covered by a metal coating 32. The metal coatings 18 and 32 provide first and second electrodes of each of the channels 82 and 84.

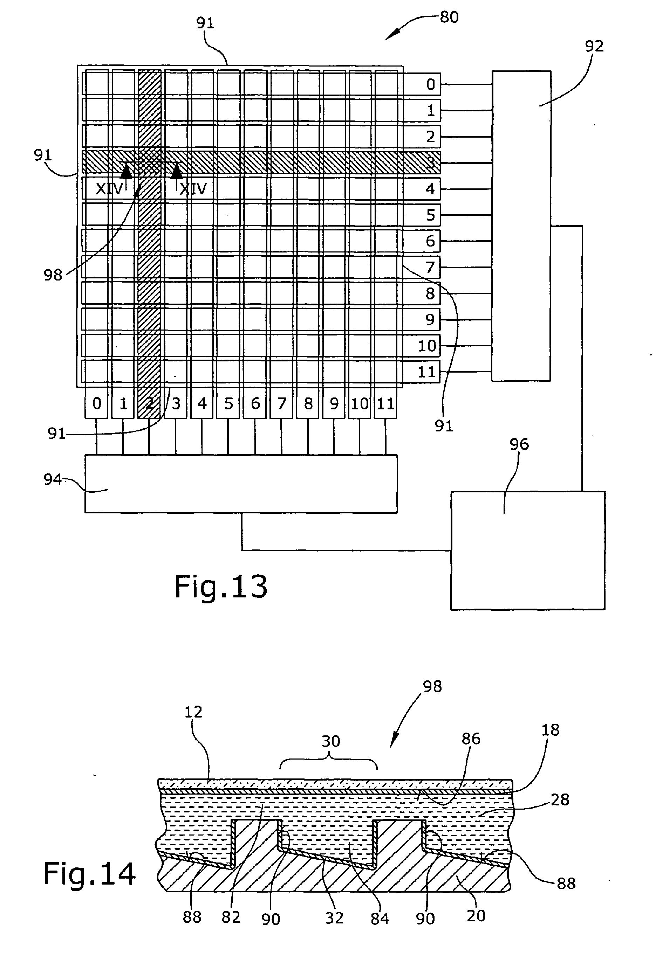

The substrates 12 and 20 are arranged such that the channels 82 and 84 cross each other. The space defined by the channels between the substrates 12 and 20 is filled with an electrolytic liquid 28 (not shown in Fig. 12 but shown in Fig. 14). Moreover, at the outer edge 91 of the substrates 12 and 20, the device 80 is sealed (not shown) so that the electrolytic liquid 28 cannot escape from between the substrates 12 and 20.

The electrodes 30 and 32 of the substrates 12 and 20, respectively, can be controlled like line and column electrodes of a matrix display. Fig. 13 schematically shows how the display 80 is controlled by column and line multiplexors 92,94 for selectively applying voltage to specific ones of the electrodes. The multiplexors 92,94 are controlled by a controller 96. In this situation as depicted in Fig. 13, a sufficient operating voltage for initiating dissolving of material of electrode 30 is applied between the first electrode 30 of line 3 and the second electrode 32 of column 2 . Accordingly, pixel 98 located at the crossing of line 3 and column 2 is provided with the operating voltage so that the material of electrode 30 within this area dissolves into the electrolytic liquid 28 resulting in increasing transmissivity of the first substrate 12 within that area providing switching from the first indicating state (no transmissivity) to the second indicating state (transmissivity).

Another specific feature which can also be used in connection with the embodiments shown in Figures 1 to 11 will be described hereinbelow referring to Fig. 14. As can be seen from Figs. 12 and 14, the bottoms 88 of the second channels 84 are slightly inclined such that the distance between both electrodes at the one side wall of the second channel 84 is larger than at the other side wall. The dissolving process starts within that area of the first electrode 30 in which the distance of that electrode to the second electrode 32 is smallest. The dissolving process continues according to a predetermined gradient defined by the inclination of the second substrate 32. This situation is shown in more detail in Fig. 14. By this specific design the formation of islands within the area of the first electrode 30 can be prevented wherein islands are defined by material of the metal layer 18 having no contact and connection to other areas of the metal layer 18. An alternative configuration for preventing the formation of such islands comprises a curved design of at least one of the electrodes 30,32e.g. a convex shape of the second electrode 32 with the apex between the side surfaces 90 of the second channel 84 would result in starting the dissolving process within an area of the first electrode 30 opposite to the apex wherein the dissolving process continues towards the side surfaces 90 of the second channel 84.

The electrochemical display device according to the invention can be used generally for indicating purposes. One purpose for example is the use of the device as a time indicator. In a time indicator, the switch for applying electrical voltage to the device is controlled based on the lapse of a predetermined period of time. In such an application it is possible to display ageing or lifetime of a product. One specific use for a time indicator is an indicating means for indicating the age of blood or other material in a vessel.

Although the invention has been described and illustrated with reference to specific illustrative embodiments thereof, it is not intended that the invention be limited to those illustrative embodiments. Those skilled in the art will recognise that variations and modifications can be made without departing from the true scope of the invention as defined by the claims that follow. It is therefore intended to include within the invention all such variations and modifications as fall within the scope of the appended claims and equivalents thereof.

## Claims

1. Electrochemical display device capable of irreversibly switching from a first indicating state to a second indicating state, said device comprising:
- a substrate (12) having an electrically insulating surface (16),
- a first electrode (30) located on at least a part of said surface (16) of said substrate (12),
- wherein said substrate (12), at least within said part of its surface (16) is light-transmissive, the transmissivity of the combination of said substrate (12) and said first electrode (30) being less than that of said part of said substrate (12),
- a second electrode (32), and
- an electrolytic liquid (28) arranged between and in electrical contact with said first and second electrodes (30,32),
- wherein, upon application of an electrical voltage to said first and second electrodes (30,32), material of said first electrode (30) dissolves into said electrolytic liquid (28) exposing at least partially said substrate (12) thereby switching from the first indicating state to the second indicating state.

2. Electrochemical display device according to claim 1, further comprising several first electrodes (30) or several second electrodes (32) said first electrode or electrodes (30) being in electrical contact with said second electrode or electrodes (32) through the electrolytic liquid (28).

3. Electrochemical display device according to claim 1 or 2, further comprising at least one porous element (54) soaked with the electrolytic liquid (28) and arranged between said first and second electrodes (30,32).

4. Electrochemical display device according to claim 3, wherein the porous element (54) comprises a nonwoven layer.

5. Electrochemical display device according to any one of claims 1 to 4, wherein said substrate (12) comprises at least one electrically-conductive lead connected to said first electrode (30).

6. Electrochemical display device according to any one of claims 1 to 5, wherein said first electrode (30) comprises a metal layer (18) coated onto said substrate (12).

7. Electrochemical display device according to any one of claims 1 to 6, wherein said second electrode (32) is located on a further substrate (20).

8. Electrochemical display device according to any one of claims 1 to 7, wherein at least one of the substrates (12,20) comprises at least one electrically-conductive lead (42,44) and connected to the respective electrode (32).

9. Electrochemical display device according to claim 7 or 8, wherein at least one of the electrodes (30,32) comprises a metal layer (18) coated onto said respective substrate (12,20).

10. Electrochemical display device according to claim 9, wherein at least one of the substrates (12,20) comprises at least one recess (26) filled with the electrolytic liquid (28) and having side and bottom walls on at least one of which the respective electrode (32) is arranged.

11. Electrochemical display device according to any one of claims 1 to 10, wherein said substrate (12), or said further substrate (20) if provided, comprises a synthetic film material.

12. Electrochemical display device according to any one of claims 1 to 11, wherein said electrolytic liquid (28) is at least partially surrounded by an evaporation barrier.

13. Electrochemical display device according to any one of claims 1 to 12, wherein the electrolytic liquid (28) is coloured.

14. Electrochemical display device according to claim 1, comprising
- an electrically-insulating first substrate layer (12) forming said substrate and metallized for providing said first electrode (30),
- an electrically-insulating second substrate layer (20) metallized for providing said second electrode (32),
- a porous pad (54) soaked with said electrolytic liquid (28) and located between said substrate layers (12,20), and
- an electrically non-conductive seal (56) arranged around said porous pad (54),
- wherein said substrate layers (12,20) are spaced and electrically isolated from each other by said non-conductive seal (56).

15. Electrochemical display device according to claim 14, wherein said second substrate layer (20) comprises an electrically conductive path (44) insulated from said second electrode (32) and in electrical contact with said first electrode (30) of said first substrate layer (12).

16. Electrochemical display device according to claim 14 or 15, wherein
- said second substrate layer (20) is provided with several second electrodes (32),
- several porous pads (54) soaked with electrolytic liquid (28) are provide surrounded by said seal (56), and
- said first substrate layer (12) covers the arrangement of said porous pads (56).

17. Electrochemical display device according to claim 14 or 15, wherein
- said first substrate layer (12) is provided with several first electrodes (30),
- said porous pad (54) is arranged such that different parts thereof overlap with respective first electrodes (30), and
- said seal (56) surrounds each of said different parts of said porous pad (54).

18. Electrochemical display device according to any one of claims 14 to 17, wherein said seal (56) comprises bonding material such as adhesive material or heat seal material.

19. Electrochemical display device according to claim 1, wherein
- the substrate (12) comprises at least two parallel first channels (82) being open to one side of the substrate (12), each of said first channels (82) having a surface provided with a first electrode (30) extending along said first channel (82),
- a second substrate (20) comprises at least two parallel second channels (84) being open to one side of the second substrate (20) facing said first substrate (12), each of said second channels (48) having a surface provided with a second electrode (32) extending along said second channel (84),
- wherein said substrates (12,20) are arranged such that the first and second channels (82,84) are facing and crossing each other,
- wherein said first and second channels (82,84) are filled with the electrolytic liquid (28), and
- wherein, upon application of said voltage to one of said first electrodes (20) and one of said second electrodes (32), material of said one first electrode (30) dissolves into said electrolytic liquid (28) in the region in which the first associated channel (82) crosses the associated second channel (84).

20. Electrochemical display device according to any one of claims 1 to 18, wherein the distance between a first electrode (30) and a second electrode (32) varies.

21. Electrochemical display device according to claim 20, wherein of at least one of the facing electrode surfaces (30,32) is arcuate, or the facing electrode surfaces (30,32) are substantially planar and are inclined with respect to each other.
